# EUROPEAN PATENT APPLICATION

(11) **EP 4 350 914 A1**
(43) Date of publication of application: **10.04.2024**
(21) Application number: 23202248.3
(22) Date of filing: 06.10.2023
(51) Int. Cl.: H02G 3/10, H02G 3/14, H01R 13/74, H02G 3/08, H02B 1/46, H05K 5/00, H05K 7/14, H02G 3/18

(54) **A SUPPORT GROUP FOR ELECTRIC MODULES**

(30) Priority: 06.10.2022 IT 202200020562
(71) Applicant: Vimar S.p.A., 36063 Marostica (VI) (IT)
(72) Inventor: SANVIDO, Roy, 31037 Loria (TV) (IT); MOCELLIN, Dario, 36061 Bassano del Grappa (VI) (IT); ZAMPIERIN, Ilario, 36061 BASSANO DEL GRAPPA (VI) (IT)
(74) Representative: Locas, Davide

(57) **Abstract**

A support assembly for electric modules comprising a support base, and an upper portion which comprises fixing means configured to fix, directly or indirectly, at least one electric module. The upper portion is configured in such a way that it can be positioned on the support base according to a first operating position and a second operating position. The fixing means and support base are placed at a first distance in the first operating position and at a second distance, greater than the first, in the second operating position.

## Description

The present invention relates to a support assembly for electric modules, of the type intended to form a support base to be used on tables or other surfaces and to be used in electrical installations, e.g. of the civil or industrial type.

In the context of civil and industrial electrical installations, it may be necessary to install switches, sockets and electric modules of various types at tables or other support surfaces.

For this purpose, it is known to use support boxes, that are not recessed in the wall, capable of receiving the required electric modules and connected via an external cable to the corresponding components of the system, e.g. to a lighting point to be controlled or another device to be controlled, or yet to respective phase, earth and neutral conductors.

These support boxes are visible while they are used and there is a particular need to keep their dimensions as small as possible.

However, the different types of electric modules have different overall dimensions, particularly in terms of depth, and, in order to be able to receive all the normally employed types, it is necessary to provide volumes for the support box that are not often used, resulting in an increase in the overall dimensions that is actually not always necessary.

The object of the present invention is to make available a support assembly for electric modules that is structurally and functionally designed to at least partially overcome one or more of the limitations of the above-mentioned prior art.

In the context of this problem, one object of the present invention is to provide a support assembly for electric modules that can receive electric modules of different depths, adapting its dimensions for this purpose.

A further object is to make available a support assembly for electric modules that is as small as possible in relation to the modules received therein.

It is also the object of the present invention to provide a support assembly for electric modules that is versatile for all installation requirements, without this additional functionality significantly affecting production costs.

Another object of the present invention is to provide a support assembly for electric modules that makes it possible to improve known solutions from the point of view of user-friendliness within a rational and cost-effective solution.

This problem is solved and one or more of these objects are achieved, at least partially, by the invention by means of a support assembly for electric modules comprising a support base, an upper portion preferably placed above said support base.

Preferably the upper portion comprises fixing means configured to fix, directly or indirectly, at least one electric module.

Preferably said upper portion is configured in such a way that it can be positioned on said support base according to a first operating position and a second operating position.

Preferably said fixing means and said support base are placed at a first distance in said first operating position and at a second distance, greater than said first distance, in said second operating position.

It will be appreciated that thanks to the support assembly for electric modules of the present invention, it is possible to vary the distance between the fixing means and the support base in such a way as to provide two different configurations for fixing electric modules. These configurations differ in particular in the distance provided between the base and the fixing means of the electric modules. A greater distance, in fact, allows more space for receiving the modules, enabling the assembly to be adapted to larger modules.

This possibility is implemented by positioning the upper portion in two different positions.

The installer will then be able to select the different configuration to be adopted in the module support assembly according to specific installation requirements, without requiring additional components or modifications to the assembly structure.

The module support assembly can therefore remain as compact as possible, its configuration only being modified if necessary.

The present invention may have one or more of the following preferred features. In some embodiments, said upper portion is configured in such a way that said upper portion abuts said support base at a first pair of respective abutment surfaces in said first operating position and at a second pair of respective abutment surfaces in said second operating position, at least one abutment surface of said second pair of abutment surfaces being different from the abutment surfaces of said first pair.

Thanks to these features, the different operating positions can be obtained by contacting different surfaces in one rather than the other position, thus making the distance variation through a simple and mechanically strong solution.

In some embodiments, said upper portion has a substantially rectangular frame shape and defines an opening through which access is given to at least one electric module. Preferably, said upper portion is arranged in said second operating position in a position rotated by 180° about an axis substantially perpendicular to said opening with respect to when it is in said first operating position.

Thus, the modification between the two positions may be obtained by adopting a different location for one of the components of the assembly for the installation of the electric modules of the present invention. This modification may easily be carried out by the installer by requiring a simple rotation of the components. Preferably, said upper portion comprises a first abutment surface and, preferably, a second abutment surface.

Preferably, said upper portion comprises a perimeter edge wherein said first abutment surface and/or said second abutment surface are defined.

The abutment surfaces can thereby be formed in an area that does not hinder and complicate the installation of the electric modules, nor does it reduce the volume required for the installation thereof.

Preferably, said support assembly comprises abutment means that define at least one of said abutment surfaces, thus providing specific components at which the contact between the above-described base and the upper portion takes place, to the benefit of the structure rationale.

Preferably, said abutment means have an elongated shape and extend in a direction substantially perpendicular to said opening, allowing for a compact solution that allows to increase the vertical development of the module support assembly.

Preferably said abutment means comprise a main abutment element configured to enter a seat at a first operating position and to abut an edge at said second operating position, said edge and said abutment element being formed on said support base and said upper portion respectively, or vice versa.

Thanks to this feature, it is possible to selectively use one of the two abutment elements by positioning the upper portion otherwise, without this possibility affecting the overall dimensions of the structure, or in any case not significantly affecting them.

Furthermore, these characteristics are particularly advantageous in the case where the two different configurations are obtained by rotation of the upper portion.

Preferably said abutment means comprise an auxiliary abutment element configured to abut said edge at said first operating position and to be spaced from said edge at said second operating position.

Preferably said first abutment surface is defined at one end of said auxiliary abutment element and said second abutment surface is defined at one end of said main abutment element.

Preferably said main abutment element and/or said auxiliary abutment element are in the form of a rib which develops at a lateral surface of said upper portion or said support base.

Thanks to these features, the abutment surfaces can be made by means of a simple structure, which can be easily manufactured during the production of the assembly for the installation of electric modules, a production that typically takes place by plastic moulding.

In particular, the ribs are particularly advantageous in that they require only slight modifications to the moulds and generally to the production equipment normally used in order to be supplied on the upper portion or support base.

Preferably these abutment means comprise a fixing and abutment element that has a tubular shape and is configured to receive a locking screw.

Preferably said fixing and abutment element comprises an end that defines a further abutment surface.

Preferably, said support base comprises a first and a second seat for said blocking screw, said fixing and abutment element being configured in such a way that the blocking screw is received in said first seat when said upper portion is arranged in said first operating position and is received in said second seat when said upper portion is arranged in said second operating position.

Thereby, a component already typically provided in known fixing assemblys can be used, suitably modified, to obtain an additional abutment between base and upper portion.

In some embodiments, said upper portion and/or said support base define a perimeter with a substantially rectangular shape, said substantially rectangular shape defining mutually perpendicular axes of symmetry.

Preferably, said abutment means are asymmetrical with respect to one or both of said axes of symmetry.

Thereby, the contact between one pair of contact surfaces rather than the other pair may be obtained in a single position of base and upper portion, helping to simplify the transition between one configuration and the other. In addition, this feature is particularly advantageous if the transition between the two connection positions takes place by means of a 180° rotation of the upper portion. Preferably, said main abutment element has a greater longitudinal extension than the auxiliary abutment element.

Preferably, said first and second seats are formed at the respective elongated bodies, the elongated body forming the first seat having a greater longitudinal extension than the elongated body forming the second seat.

Further preferred aspects are also defined in the attached claims as well as in the following description.

In this description as well as in the accompanying claims, and more generally in the context of the present invention, certain terms and expressions are deemed to have, unless otherwise expressly indicated, the meaning expressed in the definitions below.

In particular, the term "electric module" refers to any module that can be used in a domestic, commercial or industrial electrical installation. Such modules may comprise, for exemplary and non-limiting purposes, sockets, switches of various types, sensors, ringers, buzzers, but also dummy buttons with a cover function. The characteristics and further advantages of the invention will become clearer from the following detailed description of a preferred, but not exclusive, embodiment example illustrated, by way of non-limiting example, with reference to the appended drawings in which:
- Figure 1 is a perspective view of an assembly for the installation of electric modules according to the present invention;
- Figure 2 is a perspective view of the assembly for the installation of electric modules of figure 1 wherein an electric module is installed on an associated support frame and provided with a cover plate;
- Figure 3 is an exploded perspective view of the assembly for the installation of electric modules of figure 1;
- Figure 4 is a rear view of an upper portion of the assembly for the installation of electric modules of the present invention;
- Figures 5 and 5A are respectively a perspective section side view, and a related detail, of the assembly for the installation of electric modules of the present invention in a first operating position;
- Figures 6 and 6A are respectively a perspective section side view, and a related detail, of the assembly for the installation of electric modules of the present invention in a second operating position;
- figures 7 and 7A are respectively a section side view, and a related detail, of the assembly for the installation of electric modules of the present invention in the first operating position with an installed electric module that is supported on the associated support frame and provided with the cover plate; e
- Figures 8 and 8A are respectively a section side view, and a related detail, of the assembly for the installation of electric modules of the present invention in the second operating position with an installed electric module that is supported on the associated support frame and provided with the cover plate.

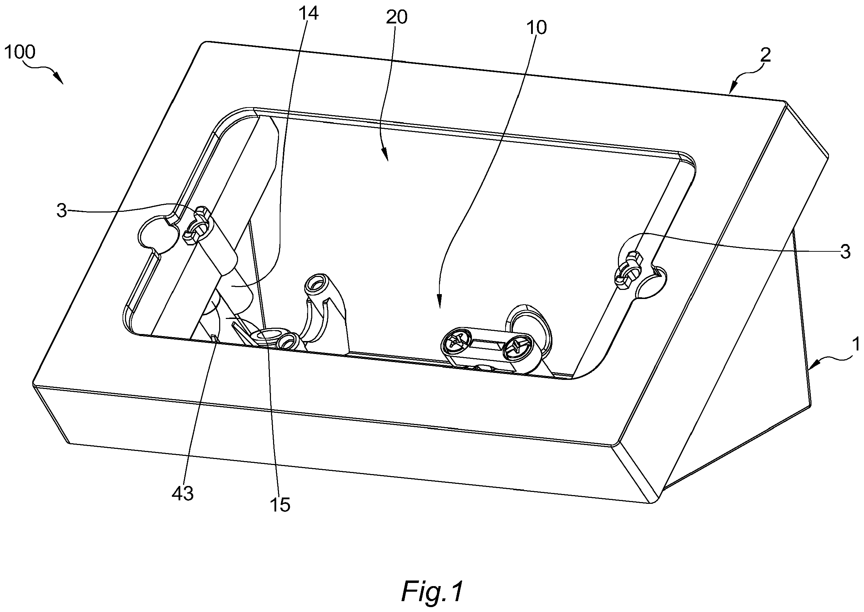

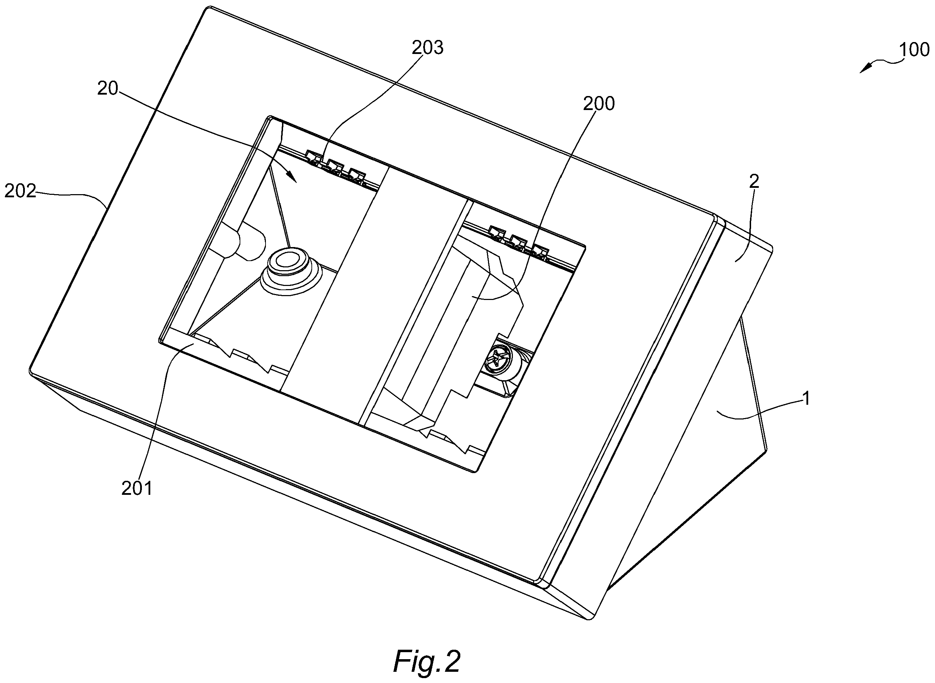

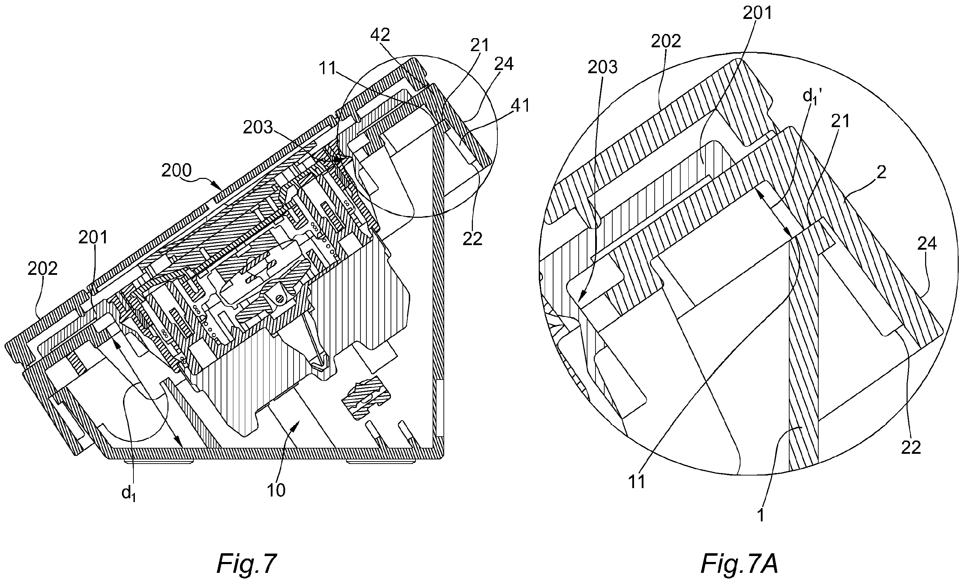

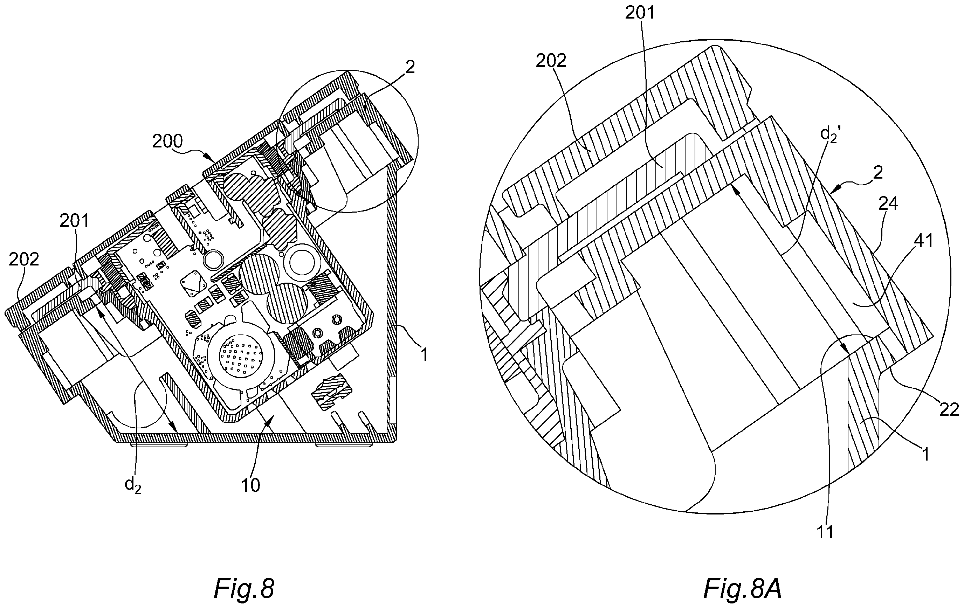

Referring initially to Figures 1 and 2, a support assembly 100 for electric modules 200 is globally referred to by reference number 100. In the embodiment of Figure 2, the electric module 200 supported by the assembly 100 consists of an axial switch. However, it is clear that this example is given for illustrative purposes only, and the assembly 100 can be used to support any type of electric module. As will be better illustrated below, the assembly 100 is in particular intended to support electric modules which have different dimensions, in particular different depths. For example, as it can be seen from Figures 7 and 8, the electric module 200 can be, as an alternative to the above-mentioned switch, and always for exemplary purposes, a USB charging device which may specifically have a greater depth than the switch.

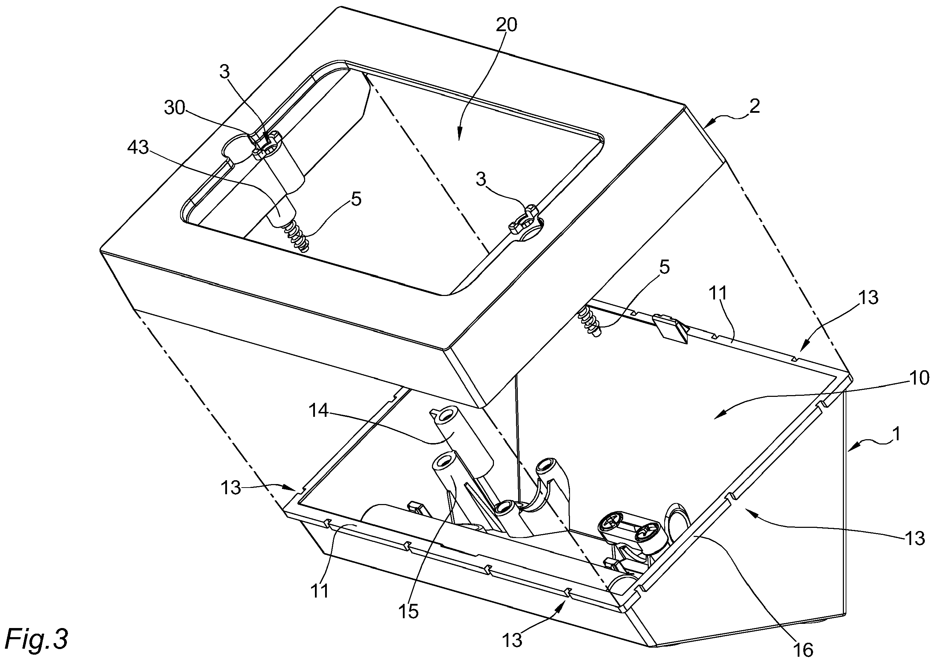

Referring now also to Figure 3, the assembly 100 of the present invention comprises a support base 1 and an upper portion 2 located above said support base 1.

Preferably, a seat 30 is made on the upper portion 2 to allow fixing a support frame 201, shown in Figure 2, provided with coupling elements 203 for fixing one or more electric modules 200. The seat 30 can, for example, be made by means of a hole in which a fixing screw of the support frame is received.

More generally, the upper portion 2 may comprise fixing means 3 configured to fix at least one electric module 200 indirectly, as in the present case wherein there is the interposition of the frame 201, or directly, in alternative embodiments not shown in the Figures.

As it can be seen from the Figures, the support assembly 100 preferably forms a box-shaped structure with a substantially prismatic shape, e.g. with trapezoidal or rectangular bases. However, it is clear that different shapes, in particular geometrically irregular ones, may also be provided.

In preferred embodiments, the upper portion 2 has a substantially rectangular frame shape, defining an opening 20 through which access is provided to the electric modules 200.

More generally, the portion 2 and/or base 1 define a perimeter with a substantially rectangular shape at which they can be coupled together, as shown in greater detail below.

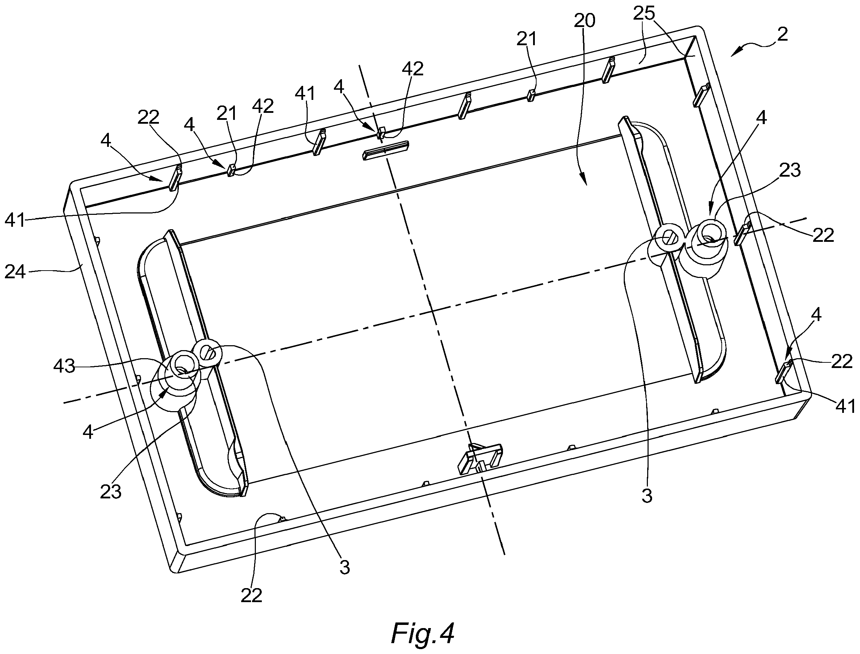

The coupling between the upper portion 2 and the support base 1 is advantageously carried out by means of abutment means 4, shown in Figure 4 and allow two different locations for the upper portion 2 in relation to the support base 1.

In fact, it will be appreciated that the upper portion 2 is configured in such a way that it can be positioned on the support base according to two distinct operating positions, referred to below as first operating position and second operating position.

The two operating positions differ in particular in the distance between the fixing means 3 and the support base 1. In fact, as it can be seen from Figures 7 and 8, in the second operating position the fixing means 3 are located at a distance d2 from the support base 1 that is greater than the distance d1 that the fixing means 3 have from the support base 1 in the first operating position.

For the sake of clarity, the two distances will be hereinafter referred to as first distance d1, in the first operating position, and second distance d2, in the second operating position.

In the Figures, the distance d1 and d2 is indicated with respect to a direction normal to the plane defined by the opening 20. However, these distances may also be defined with respect to other references.

As it can be seen from the figures, the variation in the distance is associated with an increase in the volume 10 available for receiving the modules 200 in the assembly 100.

This makes it possible to receive larger electric modules or to have more space available for electrical connections if required.

In preferred embodiments, the volume 10 may be primarily defined by the support base 1 itself, with the support portion 2 defining a cover 2.

However, it is clear that the same concepts may also apply to different configurations of the assembly 100 structure.

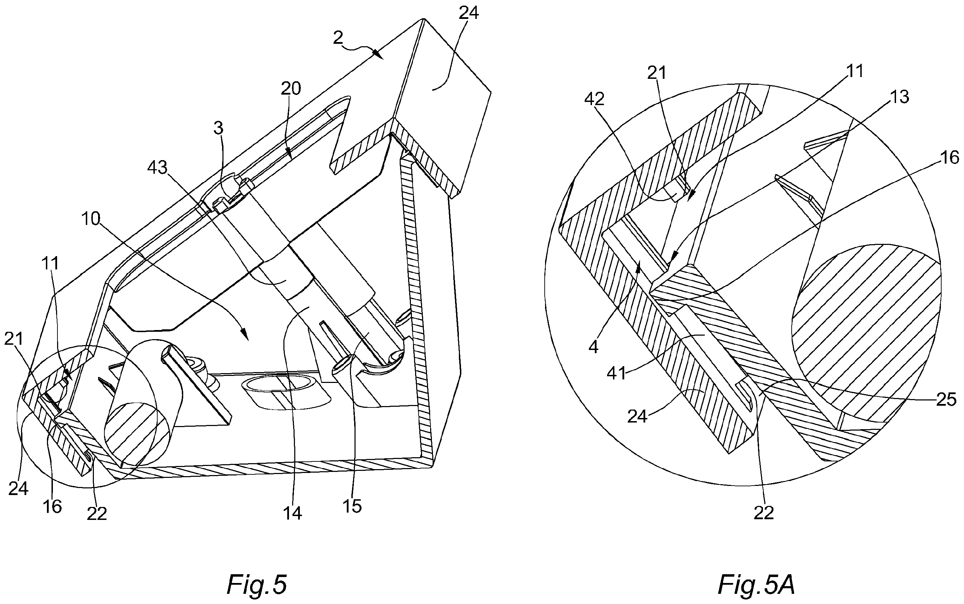

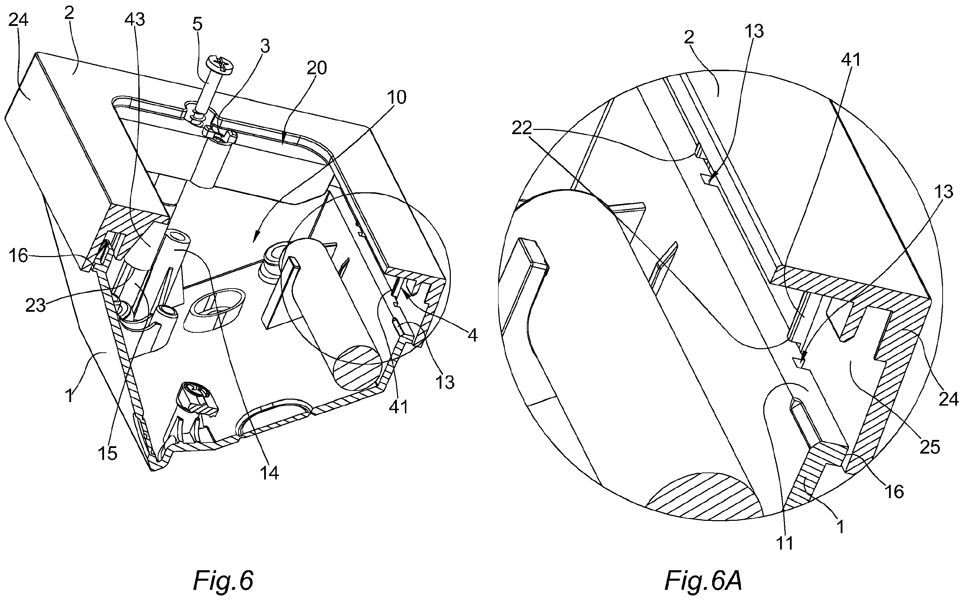

Referring now to Figures 5, 5A and 6, 6A, the coupling modes between the base 1 and the upper portion 2 will be hereinafter shown in preferred embodiments.

As it can be seen from the figures, the support between the base 1 and the upper portion 2 takes place at several abutment surfaces, which are advantageously different in the first operating position and in the second operating position.

In preferred embodiments, said upper portion 2 comprises a first abutment surface 21 and a second abutment surface 22, defined at the perimeter edge 24. Preferably, the edge 24 is configured in such a way as to cover a corresponding perimeter edge 16 of the base 1 when it is coupled with it, whether in the first operating position or in the second operating position.

In some embodiments, the abutment surfaces are formed at ribs forming the aforementioned abutment means 4 and are preferably formed at an inner side surface 25 of said edge 24.

More generally, the abutment means 4 may have an elongated shape and extend in a direction substantially perpendicular to the opening 20.

Even more generally, the abutment means may include one or more abutment elements having also a different shape and position with respective to the aforementioned ribs.

In preferred embodiments, the abutment means 4 comprise a main abutment element 41, for example formed by a first rib, and an auxiliary abutment element 42, for example formed by a second opening.

As it can be seen from Figures 5 and 5A, in the first operating position, the main abutment element 41 is configured to enter a seat 13, while the auxiliary abutment element 42 is in contact with an edge 11 of the support base 1.

It will be appreciated that in preferred embodiments, one end of said auxiliary abutment element 42 defines a first abutment surface 21, intended to contact the edge 11, which therefore defines a respective contact surface.

In the second operating position, which is instead shown in Figures 6 and 6A, the main abutment element 41 is in contact with the edge 11, and the auxiliary abutment element 42 is spaced from it.

Advantageously, the main abutment element 41 has a greater longitudinal extension than the auxiliary abutment element 42, thereby achieving the increase in the distance illustrated above.

In this case also, one end of said main abutment element 41 defines a second abutment surface 22, which is intended to get in contact with the edge 11 and therefore defines a respective contact surface.

Thus, respective pairs of abutment surfaces can be defined, that are intended to achieve a contact between the base and the upper portion in the first and second operating position respectively.

The two pairs of abutment surfaces may share a common surface, such as in case both the main abutment element 41 and the auxiliary abutment element 42 get in contact with the same edge area 11 respectively in the two operating positions.

It will also be appreciated that the edge position and the position of one or both abutment elements can be reversed, i.e. the edge 11 can be formed on the upper portion and the abutment element on the upper portion 2.

Preferably, the abutment elements 41 and 42, and more generally the abutment means 4, are made asymmetrical with respect to one or both of said axes of symmetry that the rectangular frame formed by the upper portion 2 defines. Thereby, and by appropriately positioning the abutment elements 41 and 42 and the seat 13, it is possible to move the upper portion 2 between the first and second operating positions simply by a rotation of 180° around an axis substantially perpendicular to the opening 20.

In some embodiments, the abutment means 4 comprise, in addition to or as an alternative to the abutment elements 41, 42, a fixing and abutment element 43 having a tubular shape and configured to receive a locking screw 5.

For example, such a fixing and abutment element 43 may be formed, on said upper portion 2, by a tubular portion in which the locking screw 5 is received, free to rotate.

This fixing and abutment element 43 may define an additional abutment surface 23, for example defined by its end.

The support base 1 in turn comprises a first and second seat 14, 15 intended for receiving the locking screw 5.

When the upper portion 2 is in the first operating position, the fixing and abutment element 43 is aligned with the first seat 14 and the associated end is in contact with the latter.

Conversely, when the upper portion 2 is in the second operating position, the fixing and abutment element 43 is aligned with the second seat 15 and the associated end is in contact with the latter.

The locking screw 5 is also received in the first seat 14 when said upper portion 2 is arranged in the first operating position and in the second seat 15 when the upper portion 2 is arranged in the second operating position.

It will also be appreciated that the seats are advantageously defined by respective elongated portions with a different longitudinal extension.

Thereby, the fixing and abutment element 43 can also allow a distance adjustment as previously provided.

The invention thus solves the proposed problem while achieving a plurality of advantages. In particular, it is possible to vary the actual volume within the assembly for the installation of electric modules of the present invention without using additional components. Furthermore, the components of the assembly of the present invention can be made with slight modifications compared to conventional solutions.

## Claims

1. A support assembly (100) for electric modules (200) comprising a support base (1), an upper portion (2) which is arranged above said support base (1) and which comprises fixing means (3) which are configured to fix, directly or indirectly, at least one electric module (200), the upper portion (2) being configured so as to be able to be positioned on the support base according to a first operating position and a second operating position, wherein the fixing means (3) and the support base (1) are arranged at a first distance (d1) in said first operating position and at a second distance (d2), which is greater than said first distance (d1), in said second operating position.

2. A support assembly (100) according to the preceding claim, wherein said upper portion (2) is configured in such a way that said upper portion (2) abuts said support base (1) at a first pair of respective abutment surfaces (11, 21) in said first operating position and at a second pair of respective abutment surfaces (11, 22) in said second operating position, at least one abutment surface of said second pair of abutment surfaces being different from the abutment surfaces of said first pair (11, 21).

3. A support assembly (100) according to any one of the preceding claims, wherein the upper portion (2) has a frame-like shape, which is preferably substantially rectangular, and defines an opening (20) through which access is allowed to the at least one electric module (200).

4. A support assembly (100) according to the preceding claim, wherein said upper portion (2) is configured so as to be moved between said first operating position and said second operating position following a rotation about an axis substantially perpendicular to said opening (20) so as to be arranged in said second operating position in a position rotated about said axis which is substantially perpendicular to said opening (20) with respect to when it is in said first operating position.

5. A support assembly (100) according to the preceding claim, wherein said rotation about said axis substantially perpendicular to said opening (20) is substantially equal to 180°.

6. A support assembly (100) according to any one of the preceding claims, wherein said upper portion (2) comprises a first abutment surface (21) and preferably a second abutment surface (22).

7. A support assembly (100) according to the preceding claim, wherein said upper portion (2) comprises a peripheral portion (24), wherein said first abutment surface (21) and/or said second abutment surface (22) are defined.

8. A support assembly (100) according to claim 6 or 7, comprising abutment means (4) which define at least one of said abutment surfaces.

9. A support assembly (100) according to the preceding claim, when dependent on claim 3, wherein said abutment means (4) have an elongated shape and extend in a direction substantially perpendicular to the opening (20).

10. A support assembly (100) according to claim 8 or 9, wherein the abutment means (4) comprise a main abutment element (41) which is configured to be introduced into a seat (13) in a first operating position and to abut an edge (11) in said second operating position, said edge (11) and said abutment element (41) being formed on said support base (1) and on said upper portion (2), respectively, or vice versa.

11. A support assembly (100) according to claim 10, wherein said abutment means (4) comprise an auxiliary abutment element (42) which is configured to abut said edge (11) in said first operating position and to be spaced apart from said edge (11) in said second operating position.

12. A support assembly (100) according to claim 10 or 11, wherein said main abutment element (41) and/or said auxiliary abutment element (42) is/are in the form of rib which develops at a lateral surface (25) of said upper portion (2) or said support base (1).

13. A support assembly (100) according to any one of claims 8 to 12, wherein said abutment means (4) comprise a fixing and abutment element (43) which has a tubular shape, and which is configured for receiving a blocking screw (5).

14. A support assembly (100) according to the preceding claim, wherein said fixing and abutment element (43) comprises an end which defines an additional abutment surface (23).

15. A support assembly (100) according to claim 13 or 14, wherein said support base (1) comprises a first and a second seat (14, 15) for said blocking screw (5), said fixing and abutment element (43) being configured in such a way that said blocking screw (5) is received in said first seat (14) when said upper portion (2) is arranged in said first operating position and is received in said second seat (15) when said upper portion (2) is arranged in said second operating position.
